# EUROPEAN PATENT APPLICATION

(11) **EP 4 303 997 A1**
(43) Date of publication of application: **10.01.2024**
(21) Application number: 21928387.6
(22) Date of filing: 27.09.2021
(51) Int. Cl.: H01M 50/503, H01M 50/516, H01M 50/552, H01M 50/566

(54) **ASSEMBLED BATTERY AND METHOD FOR MANUFACTURING ASSEMBLED BATTERY**

(30) Priority: 01.03.2021 JP 2021031787
(71) Applicant: Vehicle Energy Japan Inc., Hitachinaka-shi Ibaraki 312-8505 (JP)
(72) Inventor: MASUDA, Hiroaki, Hitachinaka-shi, Ibaraki 312-8505 (JP); AIZAWA, Yasuyuki, Hitachinaka-shi, Ibaraki 312-8505 (JP)
(74) Representative: MERH-IP Matias Erny Reichl Hoffmann Patentanwälte PartG mbB
(86) International application number: PCT/JP2021/035366
(87) International publication number: WO 2022/185591

(57) **Abstract**

An assembled battery includes: a plurality of batteries each including a container which houses a charge/discharge body, an electrode terminal which is provided on one surface of the container, and a sealing member which is provided between the container and the electrode terminal and which seals between the container and the electrode terminal; and a busbar which is joined to each of the electrode terminals of the batteries that differ from each other, wherein each of the electrode terminals includes an electrode terminal protruding section which extends in a direction of separation from the one surface, the busbar includes a busbar hole into which the electrode terminal protruding section is to be fitted, in the electrode terminal and the busbar, the electrode terminal protruding section and the busbar hole fit to each other and abut on each other, and a coupling section between an outer surface of the electrode terminal protruding section and an inner surface of the busbar hole is at least partially welded.

According to the configuration, a terminal and a busbar can be efficiently joined to each other while reducing heat influence to a gasket.

## Description

### [Technical Field]

The present invention relates to an assembled battery and a manufacturing method of an assembled battery.

### [Background Art]

Background art in the present technical field includes Japanese Patent No. 6392447 (PLT 1). The publication describes that "a busbar can be laser-welded to electrode terminals reliably and stably, and battery cells can be electrically connected in a low resistance state, while batteries and a busbar with a dimensional error are used. This is because, in the battery system mentioned above: the busbar is provided with a cut-away portion for guiding a protruding section of the electrode terminal; an exposure gap that exposes the welding surface of the electrode terminal is provided between the cut-away portion and the protruding section; and the busbar is welded to the electrode terminal by both the fillet weld part and the penetration weld part in a predetermined welding width such that the inner edge of the cut-away portion is welded to the welding surface by the fillet weld part and a facing surface that faces the welding surface of the electrode terminal is welded to the welding surface by the penetration weld part".

### [Citation List]

### [Patent Literature]

[PLT 1] Japanese Patent No. 6392447

### [Summary of Invention]

### [Technical Problem]

PLT 1 discloses a method of joining a terminal welding surface and a busbar cut-away portion to each other using a laser by fillet welding and penetration welding. The method disclosed in PLT 1 involves welding an area as wide as possible with a protruding section of a terminal as a reference for laser irradiation. However, with this method, since penetration welding causes the terminal to melt over a wide range, heat input to a gasket (sealing member) by the laser is a concern. The gasket is provided as a seal material between a terminal and a lid material and retains sealing properties and provides a hermetic seal using repulsion generated when compressed. Since the gasket is made of a resin material, when heat causes a temperature of the gasket to reach or exceed a limit, the repulsion may decline due to deterioration and sealing properties may be impaired. Since laser welding generates heat equal to or exceeding a melting point of metal, although a coupled portion between the metal and the gasket does not melt, heat transfer from the metal to the gasket may cause the temperature of the gasket to rise to a level at which the gasket deteriorates.

Therefore, the present invention provides a structure for efficiently joining a terminal and a busbar to each other while reducing heat influence to a gasket.

### [Solution to Problem]

In order to solve the problem described above, for example, a configuration described in the claims is adopted.

While the present application includes a plurality of means for solving the problem described above, an example of such means is "an assembled battery including: a plurality of batteries each including a container which houses a charge/discharge body, an electrode terminal which is provided on one surface of the container, and a sealing member which is provided between the container and the electrode terminal and which seals between the container and the electrode terminal; and a busbar which is joined to each of the electrode terminals of the batteries that differ from each other, wherein each of the electrode terminals includes an electrode terminal protruding section which extends in a direction of separation from the one surface, the busbar includes a busbar hole into which the electrode terminal protruding section is to be fitted, in the electrode terminal and the busbar, the electrode terminal protruding section and the busbar hole fit to each other and abut on each other, and a coupling section between an outer surface of the electrode terminal protruding section and an inner surface of the busbar hole is at least partially welded".

### [Advantageous Effect of Invention]

According to the present invention, a terminal and a busbar can be efficiently joined to each other while reducing heat influence to a gasket.

### [Brief Description of Drawings]

[Figure 1] Figure 1 is an outer appearance perspective view of a square secondary battery.
[Figure 2] Figure 2 is an exploded perspective view of a square secondary battery.
[Figure 3] Figure 3 is an exploded perspective view showing a state where a part of a wound electrode group has been expanded.
[Figure 4] Figure 4 is an outer appearance perspective view of a battery module.
[Figure 5] Figure 5 is a cross sectional view of a fitting section between a terminal and a busbar according to Embodiment 1.
[Figure 6] Figure 6 is a cross sectional view after joining of the fitting section between a terminal and a busbar according to Embodiment 1.
[Figure 7] Figure 7 is a top view of a cell and a busbar according to Embodiment 1.
[Figure 8] Figure 8 is a top view of a cell and a busbar according to Embodiment 2.
[Figure 9] Figure 9 is a top view of a cell and a busbar according to Embodiment 3.
[Figure 10] Figure 10 is a cross sectional view of a fitting section between a terminal and a busbar according to Embodiment 3.

### [Description of Embodiments]

Hereinafter, embodiments will be described with reference to the drawings.

### [Embodiment 1]

In the present embodiment, an example of a flat wound secondary battery 100 will be described.

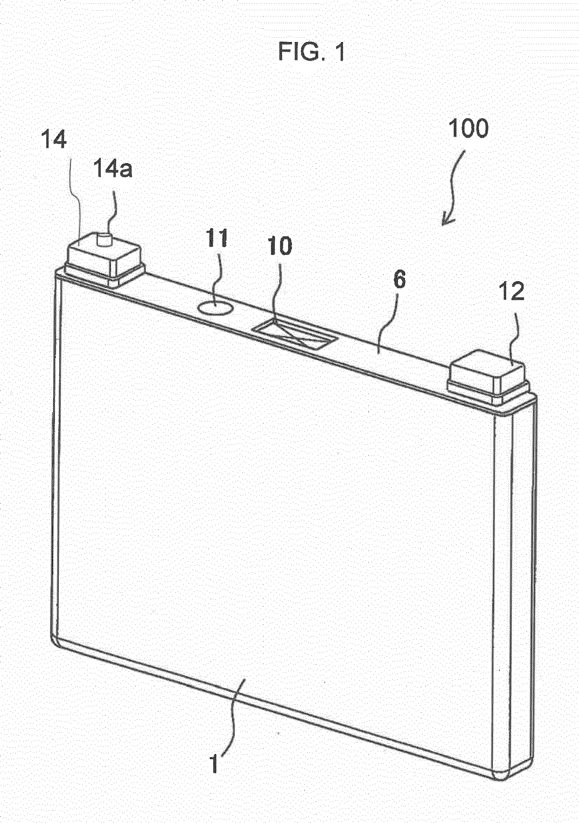

Figure 1 is an outer appearance perspective view of a flat wound secondary battery.

The flat wound secondary battery 100 includes a battery can 1 and a lid (battery lid) 6. The battery can 1 includes side surfaces including a pair of opposing wide-width side surfaces 1b with a relatively large area and a pair of opposing narrow-width side surfaces 1c with a relatively small area, a bottom surface 1d, and an opening section 1a above the side surfaces.

A wound group 3 is housed in the battery can 1 and the opening section 1a of the battery can 1 is sealed by the battery lid 6. The battery lid 6 having an approximately rectangular flat plate shape is welded so as to close the upper opening section 1a of the battery can 1 to seal the battery can 1. The battery lid 6 is provided with a positive electrode external terminal 14 and a negative electrode external terminal 12. The wound group 3 is charged and power is supplied to an external load via the positive electrode external terminal 14 and the negative electrode external terminal 12. The battery lid 6 is integrally provided with a gas exhaust valve 10, and when pressure inside the battery container rises, the gas exhaust valve 10 opens to discharge gas from inside and lowers the pressure inside the battery container. Accordingly, safety of the flat wound-secondary battery 100 is secured.

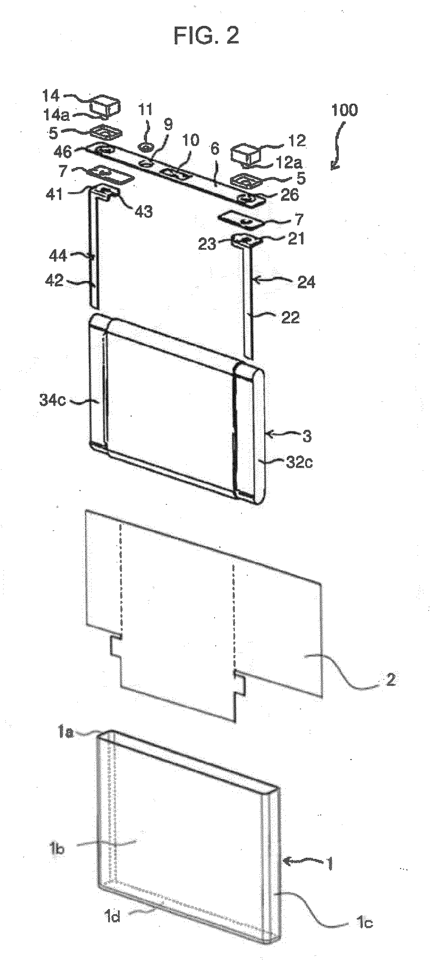

Figure 2 is an exploded perspective view of a square secondary battery.

The battery can 1 of the flat wound secondary battery 100 includes a rectangular bottom surface 1d, side surfaces 1b and 1c constituting a square cylinder structure which rises from the bottom surface 1d, and an opening section 1a which opens upward at upper ends of the side surfaces 1b and 1c. The wound group 3 is housed inside the battery can 1 via an insulating protective film 2.

Since the wound group 3 is wound in a flat shape, the wound group 3 includes a pair of mutually opposing semicircular sections with a semicircular cross section and a planar section which is continuously formed between the pair of semicircular sections. The wound group 3 is inserted into the battery can 1 from one semicircular section and a side of the other semicircular section is arranged on a side of the upper opening so that a winding axis direction is parallel to a lateral direction of the battery can 1.

A positive electrode foil-exposed section 34c of the wound group 3 is electrically coupled to the positive electrode external terminal 14 provided on the battery lid 6. via a positive electrode collector plate (collector terminal) 44. In addition, a negative electrode foil-exposed section 32c of the wound group 3 is electrically coupled to the negative electrode external terminal 12 provided on the battery lid 6 via a negative electrode collector plate (collector terminal) 24. Accordingly, power is supplied to an external load from the wound group 3 via the positive electrode collector plate 44 and the negative electrode collector plate 24, and externally-generated power is supplied to the wound group 3 via the positive electrode collector plate 44 and the negative electrode collector plate 24 to charge the wound group 3.

In order to respectively electrically insulate the positive electrode external terminal 14 and the negative electrode external terminal 12, and the positive electrode collector plate 44 and the negative electrode collector plate 24, from the battery lid 6, the battery lid 6 is provided with a gasket 5 which is a sealing member and an insulating plate 7. In addition, after injecting an electrolyte into the battery can 1 from an electrolyte injection port 9, the electrolyte injection port 9 is sealed by joining an electrolyte injection plug 11 to the battery lid 6 by laser welding to hermetically seal the flat wound secondary battery 100.

In this case, as a material for forming the positive electrode external terminal 14 and the positive electrode collector plate 44, for example, an aluminum alloy can be used, and as a material for forming the negative electrode external terminal 12 and the negative electrode collector plate 24, for: example, a copper alloy can be used. In addition, as a material for forming the insulating plate 7 and the gasket 5, for example, a resin material with insulating properties such as polybutylene terephthalate, polyphenylene sulfide, or perfluoroalkoxy fluororesin can be used.

Furthermore, the electrolyte injection port 9 for injecting an electrolyte into the battery container is drilled in the battery lid 6 and the electrolyte injection port 9 is sealed by the electrolyte injection plug 11 after injecting the electrolyte into the battery container. In this case, as the electrolyte to be injected into the battery container, for example, a nonaqueous electrolyte prepared by dissolving a lithium salt such as lithium hexafluorophosphate (LiPF6) in a carbonate ester-based organic solvent such as ethylene carbonate can be applied.

The positive electrode external terminal 14 and the negative electrode external terminal 12 have welded joint sections to be joined by welding to a busbar or the like. Each of the welded joint sections has a rectangular parallelepiped block shape which protrudes upward from the battery lid 6 and is configured such that a lower surface opposes a surface of the battery lid 6 and an upper surface becomes parallel to the battery lid 6 at a predetermined height position.

A positive electrode coupling section 14b and a negative electrode coupling section 12b have cylindrical shapes which respectively protrude from lower surfaces of the positive electrode external terminal 14 and the negative electrode external terminal 12 and of which tips can be inserted into a positive electrode-side through hole 46 and a negative electrode-side through hole 26 of the battery lid 6. The positive electrode coupling section 14b and the negative electrode coupling section 12b penetrate the battery lid 6 and protrude further to an inner side of the battery can 1 than a positive electrode collector plate base section 41 and a negative electrode collector plate base section 21 of the positive electrode collector plate 44 and the negative electrode collector plate 24, and tips of the positive electrode coupling section 14b and the negative electrode coupling section 12b are crimped to integrally fix the positive electrode external terminal 14 and the negative electrode external terminal. 12, and the positive electrode collector plate 44 and the negative electrode collector plate 24, to the battery lid 6. The gasket 5 is interposed between the positive electrode external terminal 14 and the negative electrode external terminal 12, and the battery lid 6, and the insulating plate 7 is interposed between the positive electrode collector plate 44 and the negative electrode collector plate 24, and the battery lid 6.

The positive electrode collector plate 44 and the negative electrode collector plate 24 include: the positive electrode collector plate base section 41 and the negative electrode collector plate base section 21 with rectangular plate shapes which are arranged so as to oppose a lower surface of the battery lid 6; and a positive electrode-side coupling end section 42 and a negative electrode-side coupling end section 22 which are bent at side ends of the positive electrode collector plate base section 41 and the negative electrode collector plate base section 21, which extend along wide-width surfaces of the battery can 1 toward a bottom surface side, and which are coupled in a state of opposing and being superimposed on the positive electrode foil-exposed section 34c and the negative electrode foil-exposed section 32c of the wound group 3. A positive electrode-side opening hole 43 and a negative electrode-side opening hole 23 into which the positive electrode coupling section and the negative electrode coupling section are to be inserted are respectively formed in the positive electrode collector plate base section 41 and the negative electrode collector plate base section 21.

The insulating protective film 2 is wrapped around the wound group 3 along the flat surface of the wound group 3 and with an axis perpendicular to the winding axis direction of the wound group 3 as a central axis. The insulating protective film 2 is constituted of a single sheet or a plurality of film members made of a synthetic resin such as polypropylene and is long enough to be wound with a direction which is parallel to the flat surface of the wound group 3 and which is perpendicular to the winding axis direction as a winding center. Furthermore, the insulating protective film 2 prevents the wound group 3 and the battery can 1 from coming into contact with each other by coating the wound group 3 on a side of the bottom surface 1d of the battery can 1.

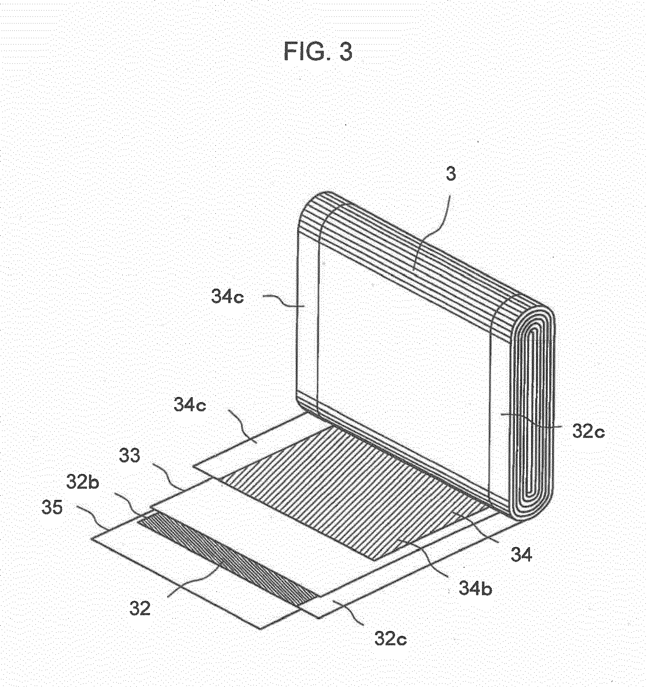

Figure 3 is an exploded perspective view showing a state where a part of a wound electrode group has been expanded.

The wound group 3 is constructed by winding a negative electrode 32 and a positive electrode 34 in a flat shape with separators 33 and 35 interposed therebetween. Among the wound group 3, the negative electrode 32 is an outermost electrode and the separators 33 and 35 are wound further outside thereof. The separators 33 and 35 play a role in providing insulation between the positive electrode 34 and the negative electrode 3.2.

A portion where a negative electrode mixture layer 32b of the negative electrode 32 is applied is larger in a width direction than a portion where a positive electrode mixture layer 34b of the positive electrode 34 is applied and, accordingly, the portion where the positive electrode mixture layer 34b is applied is configured to be always sandwiched by the portion where the negative electrode mixture layer 32b is applied. The positive electrode foil-exposed section 34c and the negative electrode foil-exposed section 32c are each bundled by a planar section and coupled by welding or the like. While the separators 33 and 35 are wider in the width direction than the portion where the negative electrode mixture layer 32b is applied, since the separators 33 and 35 are wound in the positive electrode foil-exposed section 34c and the negative electrode foil-exposed section 32c at positions of the end sections where a metal foil surface is exposed, the separators 33 and 35 do not interfere with the bundling and welding.

The positive electrode 34 has a positive electrode active material mixture on both surfaces of a positive electrode foil which is a positive electrode current collector, and the positive electrode foil-exposed section 34c on which the positive electrode active material mixture is not applied is provided at an end section on one side in the width direction of the positive electrode foil. The negative electrode 32 has a negative electrode active material mixture on both surfaces of a negative electrode foil which is a negative electrode current collector, and the negative electrode foil-exposed section 32c on which the negative electrode active material mixture is not applied is provided at an end section on another side in the width direction of the positive electrode foil. The positive electrode foil-exposed section 34c and the negative electrode foil-exposed section 32c are, respectively, regions where a metal surface of electrode foils is exposed and are wound so as to be arranged at positions on one side and another side in the winding axis direction.

With respect to the positive electrode 34, a positive electrode mixture was fabricated by respectively adding, to 100 parts by weight of lithium manganate (chemical formula LiMn2O4) as a positive electrode active material, 10 parts by weight of scale-like graphite as a conductive material and 10 parts by weight of polyvinylidene fluoride (hereinafter, referred to as PVDF) as a binder, further adding N-methylpyrrolidone (hereinafter, referred to as NMP) as a dispersion solvent, and mixing the mixture. The positive electrode mixture was applied to both surfaces of a 20 µm-thick aluminum foil (positive electrode foil) with the exception of a welding section (positive electrode unapplied section). Subsequently, through drying, pressing, and cutting steps, the positive electrode 34 in which a thickness of the positive electrode active material applied section excluding the aluminum foil is 90 µm was obtained.

In addition, while a case where lithium manganate is used as the positive electrode active material is exemplified in the present embodiment, other lithium manganates having a spinel crystal structure or a lithium manganese compound oxide having been partially replaced or doped with metal elements, lithium cobaltate or lithium titanate having a lamellar crystal structure, or a lithium-metal compound oxide in which a part of lithium cobaltate or lithium titanate is replaced or doped with metal elements may be used instead.

With respect to the negative electrode 32, a negative electrode mixture was fabricated by adding, to 100 parts by weight of amorphous carbon powder as a negative electrode active material, 10 parts by weight of PVDF as a binder, further adding NMP as a dispersion solvent, and mixing the mixture. The negative electrode mixture was applied to both surfaces of a 10 µm-thick copper foil (negative electrode foil) with the exception of a welding section (negative electrode unapplied section). Subsequently, through drying, pressing, and cutting steps, the negative electrode 32 in which a thickness of the negative electrode active material applied section excluding the copper foil is 70 µm was obtained.

While a case where amorphous carbon is used as the negative electrode active material is exemplified in the present embodiment, the negative electrode active material is not limited thereto and carbonaceous material such as natural graphite which enables lithium ions to be inserted and removed, various artificial graphite material, and coke, compounds of Si or Sn (such as SiO or TiSi2), or a composite material thereof may be used. In addition, a particle shape of the negative electrode active material is not particularly limited and may be a scale-like shape, a spherical shape, a fibrous shape, or a clumped shape.

In addition, while a case where PVDF is used as the binder in the-applied sections in the positive electrode and the negative electrode has been exemplified in the present embodiment, polymers such as polytetrafluoroethylene, polyethylene, polystyrene, polybutadiene, butyl rubber, nitrile rubber, styrenebutadiene rubber, polysulfide rubber, cellulose nitrate, cyanoethyl cellulose, various latexes, acrylonitrile, vinyl fluoride, vinylidene fluoride, propylene fluoride, chloroprene fluoride, and acrylic resins and mixtures thereof can be used.

Furthermore, as the axial core, for example, an axial core constructed by winding a resin sheet with higher bending rigidity than any of the positive electrode foil, the negative electrode foil, and the separator 33 can be used.

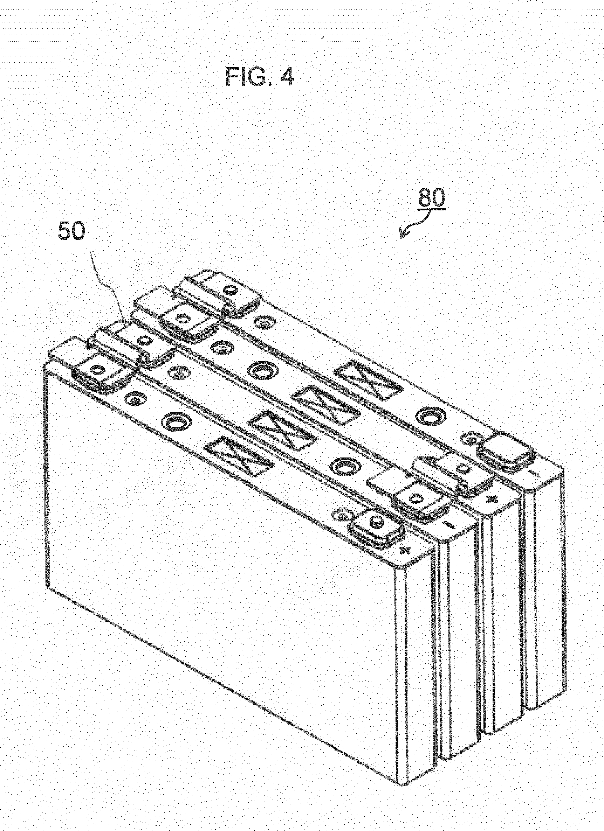

Figure 4 is an outer appearance perspective view of a battery module: A battery module 80 is created by arranging and joining, in series, the flat wound secondary battery 100 described above in plurality. A busbar 50 used to provide an electrical joint between cells is joined to each of positive and negative electrode terminals by laser welding. Compared to different materials, namely aluminum and copper, being used in the positive electrode terminal and the negative electrode terminal, laser welding requires that joining be performed between pieces of a same metal. Therefore, in order to convert a substance on a busbar component, the busbar uses a clad material of aluminum and copper. The clad material busbar is used to perform laser welding between pieces of metals which are the same as the terminals, namely, aluminum and copper respectively.

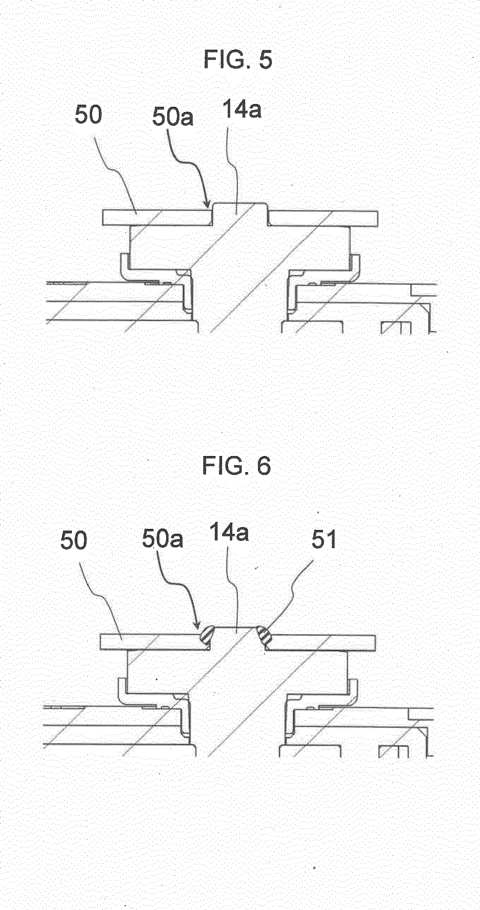

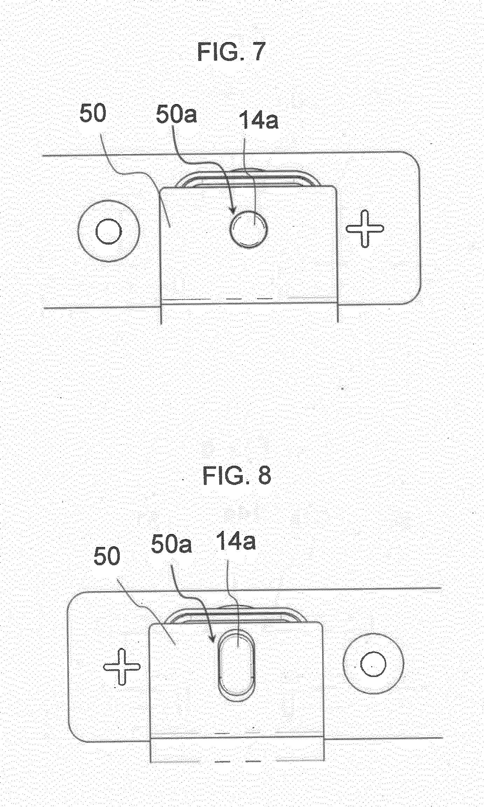

Figure 5 is a cross sectional view of a joint section between a terminal and a busbar according to Embodiment 1, Figure 6 is a cross sectional view after welding of the joint section between the terminal and the busbar, and Figure 7 is an outer appearance view from an upper surface of the joint section between the terminal and the busbar. The terminal 14 is provided with an electrode terminal protruding section 14a on a side of a cell upper surface and the busbar 50 is provided with a busbar hole 50a into which the electrode terminal protruding section 14a is to be fitted. While a structure on a positive electrode side is illustrated in the embodiment, the negative electrode may also have a similar structure. The electrode terminal protruding section 14a and the busbar hole 50a each have a round shape with a diameter ranging from 2 mm to 4 mm. While one electrode terminal protruding section 14a is provided in a center section of a terminal in the embodiment, the electrode terminal protruding section 14a may be provided. in plurality. When providing the electrode terminal protruding section 14a in plurality, the diameter of the electrode terminal protruding section 14a and the diameter of the busbar hole 50a must be reduced. This is because enough area to bring a probe for cell charging into contact is required. In addition, an increase in the number of busbar holes 50a makes processing of terminals difficult, and providing the busbar hole 50a in plurality requires that an effect on strength be taken into consideration. In consideration of the effect on processing, the number of the electrode terminal protruding section 14a is desirably one or around two.

After lining up a plurality of cells and fixing an arrangement of the cells, the busbar hole 50a of the busbar 50 is fitted in alignment with the electrode terminal protruding section 14a. Therefore, in order to improve positioning and fitting, a fitting state must be set to a lax tolerance. Specifically, dimensions of the electrode terminal protruding section 14a and the busbar 50 hole a are determined so as to create a gap of around 0.1 mm between the electrode terminal protruding section 14a and the busbar 50 hole a. In addition, an edge of an outer circumference of the upper surface of the electrode terminal protruding section 14a is rounded or cornered. In a similar manner, an edge of an inner circumference of the busbar hole 50a opposing the electrode terminal protruding section 14a is rounded or cornered. Sufficient fitting is enabled when both rounding or cornering of the electrode terminal protruding section 14a and rounding or cornering of the busbar hole 50a are around approximately 0.1 mm to 0.5 mm.

The electrode terminal protruding section 14a and the busbar hole 50a are fitted and an outside surface of the electrode terminal protruding section 14a and an inside surface of the busbar hole 50a are butt-welded by a laser. Setting a diameter of laser welding to approximately 0.5 mm to 1.0 mm enables sufficient melting even when the fitting tolerance is lax.

In addition, by setting a height of the electrode terminal protruding section 14a higher than a thickness of the busbar 50, the electrode terminal protruding section 14a may be made to protrude from the busbar 50 when fitted. For example, when the thickness of the busbar 50 is approximately 0.8 mm to 1.0 mm, the height of the electrode terminal protruding section 14a may be set to 1.0 mm or higher. In consideration of a manufacturing tolerance of the terminal, the height of the electrode terminal protruding section 14a is desirably around 1.2 mm. A probe for inspection is brought into contact with a protruding section of the electrode terminal protruding section 14a. In order to inspect a welded state of the terminal and the busbar, resistance of terminals of a cell can is measured to check electric coupling. . Therefore, since the probe can be brought into direct contact with the protruding electrode terminal protruding section 14a, the probe can be readily positioned and inspections can be readily performed.

In addition, in the present invention, an advantageous effect can be obtained both when the fitting structure described earlier is applied to both positive and negative electrodes and when the fitting structure is applied to only one of the positive and negative electrodes. Since the material of the positive electrode is aluminum and a certain melting amount is necessary to produce strength, providing a protrusion enables melting to be efficiently performed. Since the material of the negative electrode is copper, a certain laser output is necessary in consideration of an effect of reflectance, and creating a butting structure of the outside surface of the electrode terminal protruding section 14a and the inside surface of the busbar hole 50a enables welding to be performed with small laser output.

### [Second embodiment]

Figure 8 is a sectional view of a joint section of a terminal and a busbar according to Embodiment 2. Description of similar portions to Embodiment 1 among a structure shown in Figure 8 will be omitted. While the electrode terminal protruding section 14a has a circular shape in Embodiment 1, the electrode terminal protruding section 14a has an oblong shape in Embodiment 2. In addition, in Embodiment 2, the busbar hole 50a is a long hole and the long hole is positioned parallel to a short side of a terminal. Extending a straight portion of the long hole enables a larger welding area to be secured. Furthermore, by making the busbar hole 50a longer than the shape of the electrode terminal protruding section 14a, positioning for fitting can be readily performed. Since a butting section between an outside surface of the electrode terminal protruding section 14a and an inside surface of the busbar hole 50a becomes longer and a larger welding area can be secured, welding may be performed partially instead of over an entire circumference.

There is a step of charging a cell before joining a terminal and a busbar to each other. In doing so, a probe is brought into contact from an upper surface of the terminal. A planar section is required in order to bring probes for each of current detection and voltage detection into contact. In Embodiment 2, since an area for bringing a probe for charging into contact decreases due to an increase in the area of the electrode terminal protruding section 14a, ingenuity must be exercised in a diameter or a position of the probe.

### [Third embodiment]

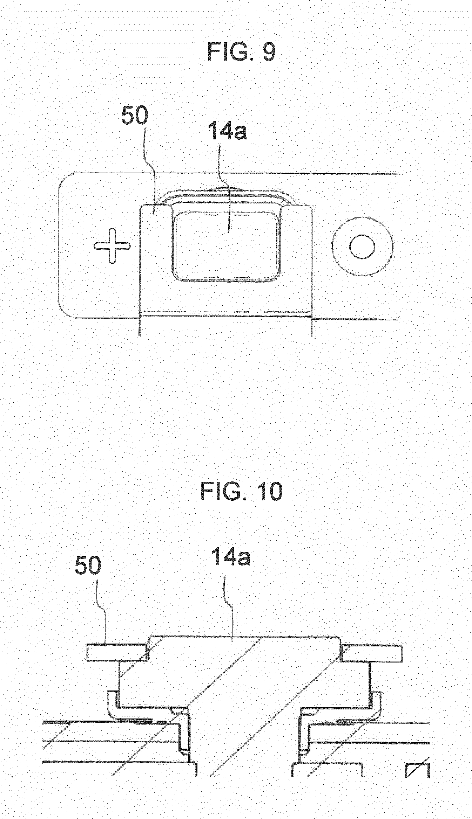

Figure 9 is a top view of a cell and a busbar according to Embodiment 3, and Figure 10 is a sectional view of a joint section between a terminal and the busbar according to Embodiment 3. Description of similar portions to Embodiment 1 and Embodiment 2 will be omitted. In the present third embodiment, an upper surface of the electrode terminal protruding section 14a is given a larger area than an upper surface of the terminal other than the electrode terminal protruding section 14a. The electrode terminal protruding section 14a has a similar shape to an external shape of the positive electrode external terminal 14, albeit each side being made shorter by around 1 to 2 mm. For example, when the external shape of the positive electrode external terminal 14 is 10.5 mm × 7.5 mm, the external shape of the electrode terminal protruding section 14a may be 9 mm × 6 mm.

While Embodiment 2 adopts a structure for securing a larger welding area by making a shape of the busbar hole 50a a long hole, there is also an effect of reducing an area to which a cell charging probe is brought into contact. In Embodiment 3, by giving the upper surface of the electrode terminal protruding section 14a a wide area, a charging probe contact area and a resistance measurement probe for checking a joint can be brought into contact on the upper surface of the electrode terminal protruding section 14a. Note that, in Embodiment 3, a U-shaped notch is provided at an end section of the busbar 50 and the electrode terminal protruding section 14a is locked by being abutted on an inner side of the U-shape.

As described above, the flat wound secondary battery 100 being an assembled battery according to the embodiments includes: a container which houses a charge/discharge body; an electrode terminal which is provided on one surface of the container; and a sealing member which is provided between the container and the electrode terminal and which seals between the container and the electrode terminal.

Furthermore, the flat wound secondary battery 100 includes a busbar which is joined to each of the electrode terminals of the batteries that differ from each other; In addition, each of the electrode terminals includes an electrode terminal protruding section which extends in a direction of.separation from the one surface, the busbar includes a busbar hole into which the electrode terminal protruding section is to be fitted, in the electrode terminal and the busbar, the electrode terminal protruding section and the busbar hole fit to each other and abut on each other, and a coupling section between an outer surface of the electrode terminal protruding section and an inner surface of the busbar hole is at least partially welded.

With the structure according to the present invention, since welding the outer surface of the terminal protruding section and the inner surface of the busbar hole moves a welding position away from a gasket, heat influence of welding to the busbar can be reduced. In addition, in accordance with market demands for smaller cells, heights of terminals must be reduced. While reducing terminals gives rise to a concern for a larger heat influence by a laser on the gasket, the heat influence can be reduced by using a projection as a welding section with the busbar as in the present invention.

One of the reasons why a reduction in heat influence can be realized is that efficient incidence of a laser due to butt welding between the outer surface of the electrode terminal protruding section and the inner surface of the busbar hole enables efficient melting to be performed with a smaller output.

Another reason why a reduction in heat influence can be realized is that since fitting and joining a terminal and a busbar enable structural strength to be retained in a shear direction and strength necessary for the welding section to be reduced, melting can be reduced. This is because there is no need to perform penetration welding in order to obtain strength and simply securing conduction will suffice.

In addition, in the present invention, an advantageous effect can be obtained both when the fitting structure described earlier is applied to both positive and negative electrodes and when the fitting structure is applied to only one of the positive and negative electrodes. Since the material of the positive electrode is aluminum and a certain melting amount is necessary to obtain strength, providing a protrusion enables melting to be efficiently performed. Since the material of the negative electrode is copper, a certain laser output is necessary in consideration of an effect of reflectance, and creating a butting structure of the.outside surface of the electrode terminal protruding section and the inside surface of the busbar hole enables welding to be performed with small laser output.

In addition, with the structure according to the present invention, making the electrode terminal protruding section higher than a thickness of the busbar and allowing the electrode terminal protruding section to protrude from an upper surface, an inspection after joining can be readily performed. The inspection after joining is a resistance inspection for guaranteeing an electrical joint and a measurement is performed by bringing a probe for inspection into contact with the electrode terminal protruding section which protrudes from the busbar. With respect to an error in a probe position, directly aiming for the electrode terminal protruding section enables contact failure to be reduced.

As exemplified in Embodiment 1 and Embodiment 2, the busbar can include a busbar hole which penetrates a portion in contact with the electrode terminal and the busbar can be structured such that the hole section fits with the electrode terminal protruding section and restricts movement in the shear direction.

In this manner, by fitting the electrode terminal protruding section to the busbar hole, the busbar can be readily positioned and the inner side surface of the busbar hole and the outer side surface of the electrode terminal protruding section can be used for welding. Furthermore, since movement of the busbar is restricted by the fitting, welding need not be intended to acquire structural strength and low-output welding for the purpose of securing electrical conduction is to suffice.

In addition, while an entirety of a boundary where the busbar hole and the electrode terminal protruding section are in contact with each other may be welded, only a portion thereof may be welded.

In addition, an electrode terminal is preferably structured so as to include an inclined surface on an edge of an outer circumference of the electrode terminal protruding section. In a similar manner, the busbar hole preferably includes an inclined surface on an edge of an inner circumference which opposes the electrode terminal. These inclined surfaces may be flat inclined surfaces or curved inclined surfaces. Due to the inclined surfaces, fitting and positioning of the busbar hole and the electrode terminal protruding section can be performed even more readily.

As exemplified in Embodiment 2, a structure may be adopted in which the busbar hole is a long hole and movement in a transverse direction of the long hole is restricted by abutting on the fitted electrode terminal protruding section. In this case, the electrode terminal protruding section may have an oval shape or a circular shape. When the shape, of the electrode terminal protruding section is an oval shape, a boundary between the busbar hole and the electrode terminal protruding section increases, which is advantageous in terms of welding. On the other hand, when the shape of the electrode terminal protruding section is a circular shape, a tolerance in a longitudinal direction of the long hole can be given greater leeway.

In addition, in the manufacturing method of an assembled battery according to the embodiments, after performing a first step of assembling a busbar which electrically couples electrode terminals of different batteries to each other, a second step of welding the electrode terminals and the busbar to each other is to be executed. In this case, the first step involves performing the assembly by fitting the electrode terminal protruding section into the busbar hole, and the second step involves at least partially welding a region along a boundary between an outside surface of the electrode terminal protruding section and an inside surface of the busbar hole.

Therefore, the terminals and the busbar can be efficiently joined to each other while reducing heat influence to a gasket.

Furthermore, in the manufacturing method of an assembled battery according to the embodiments, a third step can be performed in which an inspection tool is brought into contact with the electrode terminal protruding section and a welded state between the electrode terminal and the busbar is inspected. This is because, as disclosed in the embodiments, the electrode terminal protruding section remains exposed even after welding the busbar.

In addition, in the manufacturing method of an assembled battery according to the embodiments, by irradiating the boundary between the electrode terminal protruding section and the busbar hole with laser light having been condensed to a diameter which is larger than a gap of the boundary between the electrode terminal protruding section and the busbar hole to weld the electrode terminal protruding portion and the busbar hole to each other in the second step, heat influence to the gasket can be further reduced.

Note that the respective embodiments described above are not intended to limit the present invention and the present invention can be implemented by appropriately modifying the exemplified structures. For example, while a structure in which the busbar is provided with a hole section or a notch into which an electrode terminal protruding section of an electrode terminal is to be penetrated or by which the electrode terminal protruding section is to be locked is exemplified in the embodiments described above, shapes of the busbar and the electrode terminal protruding section can be changed as desired.

As an example, a structure may be adopted in which an electrode terminal is provided with two electrode terminal protruding sections and an end section of a busbar is assembled between the two electrode terminal protruding sections.

Furthermore, as an example, a structure may be adopted in which an electrode terminal is provided with a U-shaped electrode terminal protruding section and an end section of a busbar is housed inside the U-shape.

As long as a structure restricts movement in a shear direction due to abutting on the electrode terminal protruding section of the electrode terminal in a state where the busbar is in contact with the electrode terminal, any structure can be adopted. This is because, regardless of the structure, restricting movement of the busbar eliminates the need for securing structural strength through welding. As a result, laser output can be suppressed and the terminals and the busbar can be efficiently joined to each other while reducing heat influence to a gasket.

### [Reference Signs List]

1: battery can, 1a: opening section, 1b: wide-width side surface, 1c: narrow-width side surface, 1d: bottom surface, 2: insulating protective film, 3: wound group, 5: gasket, 6: battery lid, 7: insulating plate, 9: electrolyte injection port, 10: gas exhaust valve, 11: electrolyte injection plug, 12: negative electrode external terminal, 12b: negative electrode coupling section, 14: positive electrode external terminal, 14a: electrode terminal protruding section, 14b: positive electrode coupling section, 21: negative electrode collector plate base section, 22: negative electrode-side coupling end section, 23: negative electrode-side opening hole, 24: negative electrode collector plate, 26: negative electrode-side through hole, 32: negative electrode, 32b: negative electrode mixture layer, 32c: negative electrode foil-exposed section, 33: separator, 34: positive electrode, 34b: positive electrode mixture layer, 34c: positive electrode foil-exposed section, 35: separator, 41: positive electrode collector plate base section, 42: positive electrode-side coupling end section, 43: positive electrode-side opening hole, 44: positive electrode collector plate, 46: positive electrode-side through hole, 50: busbar, 50a: busbar hole, 51: melting section, 80: battery module, 100: flat wound secondary battery.

## Claims

1. An assembled battery, comprising:
a plurality of batteries each including a container which houses a charge/discharge body, an electrode terminal which is provided on one surface of the container, and a sealing member which is provided between the container and the electrode terminal and which seals between the container and the electrode terminal; and
a busbar which is joined to each of the electrode terminals of the batteries that differ from each other, wherein
each of the electrode terminals includes an electrode terminal protruding section which extends in a direction of separation from the one surface,
the busbar includes a busbar hole into which the electrode terminal protruding section is to be fitted,
in the electrode terminal and the busbar, the electrode terminal protruding section and the busbar hole fit to each other and abut on each other, and
a coupling section between an outer surface of the electrode terminal protruding section and an inner surface of the busbar hole is at least partially welded.

2. The assembled battery according to claim 1, wherein each of the electrode terminals includes an inclined surface on an edge of an outer circumference of the electrode terminal protruding section.

3. The assembled battery according to claim 1, wherein the busbar hole includes an inclined surface on an edge of an inner circumference which opposes the electrode terminal.

4. The assembled battery according to claim 1, wherein the busbar hole is a long hole and movement in a transverse direction of the long hole is restricted by abutting on the fitted electrode terminal protruding section.

5. A manufacturing method of an assembled battery, comprising:
a first step of assembling, with respect to a plurality of batteries each including a container which houses a charge/discharge body, an electrode terminal provided with an electrode terminal protruding section which extends in a direction of separation from one surface of the container, and a sealing member which is provided between the container and the electrode terminal and which seals between the container and the electrode terminal, a busbar which electrically couples the electrode terminals of the batteries that differ from each other; and
a second step of welding the electrode terminals and the busbar to each other, wherein
the first step involves performing assembly by fitting the electrode terminal protruding section into a busbar hole provided in the busbar, and
the second step involves at least partially welding a region along a boundary between the electrode terminal protruding section and the busbar hole.

6. The manufacturing.method of an assembled battery according to claim 5, comprising a third step of bringing an inspection tool into contact with the electrode terminal protruding section and inspecting a welded state between the electrode terminal and the busbar.

7. The manufacturing method of an assembled battery according to claim 5 or 6, wherein in the second step, the boundary between the electrode terminal protruding section and the busbar hole is irradiated with laser light having been condensed to a diameter which is larger than a gap of the boundary between the electrode terminal protruding section and the busbar hole to weld the electrode terminal protruding section and the busbar hole to each other.
